# EUROPÄISCHE PATENTSCHRIFT

(11) **EP 2 726 550 B1**
(45) Veröffentlichungstag und Bekanntmachung des Hinweises auf die Patenterteilung: **12.08.2015**
(21) Anmeldenummer: 12730494.7
(22) Anmeldetag: 25.06.2012
(51) Int. Cl.: C08L 67/02

(54) **DURCH THERMOFORMEN HERGESTELLTER ARTIKEL**
ITEM PRODUCED BY MEANS OF THERMOFORMING
ARTICLE FABRIQUÉ PAR THERMOFORMAGE

(30) Priorität: 30.06.2011 EP 11172188
(43) Veröffentlichungstag der Anmeldung: 07.05.2014
(73) Patentinhaber: BASF SE, 67056 Ludwigshafen (DE)
(72) Erfinder: SIEGENTHALER, Kai, Oliver, 68163 Mannheim (DE); AUFFERMANN, Jörg, 67251 Freinsheim (DE); BUSSMANN, Martin, 67259 Beindersheim (DE); MOLAWI, Kian, 68163 Mannheim (DE)
(86) Internationale Anmeldenummer: PCT/EP2012/062184
(87) Internationale Veröffentlichungsnummer: WO 2013/000847

(56) Entgegenhaltungen:
- WO-A1-2010/034711
- DE-A1- 19 857 067

## Beschreibung

Die vorliegende Erfindung betrifft einen durch Thermoformen hergestellten Artikel enthaltend:
i) 50 bis 85 Gew.-%, bezogen auf das Gesamtgewicht der Komponenten i bis ii, eines biologisch abbaubaren Polyesters mit einem MVR (190°C, 2,16 kg) von 1 bis 15 cm³/10 min enthaltend:
   a) 90 bis 100 mol %, bezogen auf die Komponenten a bis b, Bernsteinsäure;
   b) 0 bis 10 mol %, bezogen auf die Komponenten a bis b, einer oder mehrerer C₆-C₂₀ Dicarbonsäuren;
   c) 98 bis 102 mol %, bezogen auf die Komponenten a bis b, 1,3 Propandiol öder 1,4-Butandiol;
   d) 0,05 bis 1 Gew.- %, bezogen auf die Komponenten a bis c eines Kettenverlängerers oder Verzweigers;
ii) 15 bis 50 Gew.-%, bezogen auf das Gesamtgewicht der Komponenten i bis ii, Polymilchsäure;
iii) 10 bis 50 Gew.-%, bezogen auf das Gesamtgewicht der Komponenten i bis iv, mindestens eines mineralischen Füllstoffs;
iv) 0 bis 2 Gew.-%, bezogen auf das Gesamtgewicht der Komponenten i bis iv, einer Nährsalz-Mischung enthaltend mindestens zwei Komponenten ausgewählt aus der Gruppe bestehend aus: Stickstoff-haltiges Kation oder Anion, Schwefelhaltiges Anion, Phosphorhaltiges Anion und Kation ausgewählt aus der Gruppe bestehend aus K⁺, Na⁺, Ca²⁺, Mg²⁺ und Fe^{2/3+}.

Weiterhin betrifft die Erfindung Verfahren zur Herstellung der obengenannten Artikel.

Mit Füllstoff versehene, biologisch abbaubare Polymermischungen, die ein weiches Polymer wie beispielsweise einen aliphatisch-aromatischen Polyester (PBAT) und ein steifes Polymer wie beispielsweise Polymilchsäure (PLA) enthalten, sind aus der US 6,573,340, der DE 198 57 067 A1 und der WO 2005/063883 bekannt. Daraus durch Thermoformen hergestellte Artikel können jedoch hinsichtlich der Wärmeformbeständigkeit, des Spannungs-Dehnungsverhaltens (Elastizitätsmodul) und der biologischen Abbaubarkeit nicht immer voll überzeugen.

Ziel der vorliegenden Erfindung war es somit durch Thermoformen hergestellte Artikel bereitzustellen, die die obengenannten Nachteile nicht aufweisen. Insbesondere war es das Ziel, einen hinreichend steifen Kunststoff mit einer Wärmeformbeständigkeit ausreichend für Anwendungen im Bereich heißer Lebensmittel bereitzustellen. Außerdem sollte die Bioabbaubarkeitsgeschwindigkeit ausreichend hoch sein, damit ein Artikel mit Wandstärken von 50 µm bis 2 mm eine Zertifizierung nach ISO 17088 und/oder EN 13432 und/oder ASTM D6400 erhält.

Überraschenderweise ist ein durch Thermoformen hergestellter Artikel enthaltend:
i) 50 bis 85 Gew.-%, bezogen auf das Gesamtgewicht der Komponenten i bis ii, eines biologisch abbaubaren Polyesters mit einem MVR (190°C, 2,16 Kg) von 1 bis 15 cm³/10 min enthaltend:
   a) 90 bis 100 mol %, vorzugsweise 90 bis 99,5 mol% bezogen auf die Komponenten a bis b, Bernsteinsäure;
   b) 0 bis 10 mol %, vorzugsweise 0,5 bis 10 mol% bezogen auf die Komponenten a bis b, einer oder mehrerer C₆-C₂₀ Dicarbonsäuren;
   c) 98 bis 102 mol %, bezogen auf die Komponenten a bis b, 1,3 Propandiol oder 1,4-Butandiol;
   d) 0,05 bis 1 Gew.- %, bezogen auf die Komponenten a bis c eines Kettenverlängerers oder Verzweigers;
ii) 15 bis 50 Gew.-%, bezogen auf das Gesamtgewicht der Komponenten i bis ii, Polymilchsäure;
iii) 10 bis 50 Gew.-%, bezogen auf das Gesamtgewicht der Komponenten i bis iv, mindestens eines mineralischen Füllstoffs und
iv) 0 bis 2 Gew.-%, bezogen auf das Gesamtgewicht der Komponenten i bis iv, einer Nährsalz-Mischung enthaltend mindestens zwei Komponenten ausgewählt aus der Gruppe bestehend aus: Stickstoff-haltiges Kation oder Anion, Schwefelhaltiges Anion, Phosphorhaltiges Anion und Kation ausgewählt aus der Gruppe bestehend aus K⁺, Na⁺, Ca²⁺, Mg²⁺ und Fe^{2/3+}
sowohl hinsichtlich der Mechanik, der Wärmeformbeständigkeit und des biologischen Abbauverhaltens optimiert.

Für das interessante Eigenschaftsprofil des Artikels sind insbesondere die Komponenten i bis iii verantwortlich. Die Komponente i garantiert eine hohe Wärmeformbeständigkeit bei gleichzeitig guter biologischer Abbaubarkeit, Komponente ii sorgt für die notwendige Steifigkeit und verbessert darüber hinaus die biologische Abbaubarkeit durch einen ergänzenden Abbaumechanismus. Der mineralische Füllstoff iii) verbessert die mechanischen Eigenschaften wie E-Modul und Wärmeformbeständigkeit und fördert wie insbesondere Kreide die biologische Abbaubarkeit.

Im Folgenden wird die Erfindung näher beschrieben.

Die für die Erfindung geeigneten aliphatischen Polyester i sind in der WO 2010/034711 näher beschrieben, auf die hier ausdrücklich Bezug genommen wird.

Polyester i sind in der Regel wie folgt aufgebaut:
a) 90 bis 99,5 mol %, bezogen auf die Komponenten a bis b, Bernsteinsäure;
b) 0,5 bis 10 mol %, bezogen auf die Komponenten a bis b, einer oder mehrerer C₈-C₂₀ Dicarbonsäuren;
c) 98 bis 102 mol %, bezogen auf die Komponenten a bis b, 1,3-Propandiol oder 1,4-Butandiol und
d) 0,05 bis 1 Gew.-%, bezogen auf das Gesamtgewicht der Komponenten a bis c, eines Kettenverlängerers oder Verzweigers.

Die Synthese der beschriebenen Copolyester erfolgt vorzugsweise in einer direkten Polykondensationsreaktion der einzelnen Komponenten. Die Dicarbonsäurederivate werden dabei zusammen mit dem Diol in Anwesenheit eines Umesterungskatalysators direkt zum Polykondensat hohen Molekulargewichts umgesetzt. Auf der anderen Seite kann der Polyester auch durch Umesterung von Polybutylensuccinat (PBS) mit C₈-C₂₀ Dicarbonsäuren in Gegenwart von Diol gewonnen werden. Als Katalysatoren werden üblicherweise Zink-, Aluminium- und insbesondere Titankatalysatoren eingesetzt. Titankatalysatoren wie Tetra(isopropyl)orthotitanat und insbesondere Tetraisobutoxytitanat (TBOT) haben gegenüber den in der Literatur häufig verwendeten Zinn-, Antimon-, Kobalt- und Bleikatalysatoren wie beispielsweise Zinndioctanoat den Vorteil, dass im Produkt verbleibende Restmengen des Katalysators oder Folgeprodukt des Katalysators weniger toxisch sind. Dieser Umstand ist bei den biologisch abbaubaren Polyestern besonders wichtig, da sie beispielsweise als Kompostierbeutel oder Mulchfolien unmittelbar in die Umwelt gelangen.

Ein Gemisch der Dicarbonsäuren wird im Allgemeinen in Anwesenheit eines Überschusses an Diol zusammen mit dem Katalysator in der Regel zunächst während eines Zeitraumes von etwa 60-180 min auf eine Innentemperatur von 170 bis 230 °C erhitzt und entstehendes Wasser abdestilliert. Anschließend wird die Schmelze des so erhaltenen Präpolyesters üblicherweise bei einer Innentemperatur von 200 zu 250 °C innerhalb von 3 bis 6 Stunden bei vermindertem Druck unter Abdestillieren freiwerdenden Diols bis zur gewünschten Viskosität mit einer Viskositätszahl (VZ) von 100 bis 450 mL/g und vorzugsweise 120 bis 250 mL/g kondensiert.

Die erfindungsgemäßen Copolymere lassen sich darüber hinaus nach den in WO 96/15173 und EP-A 488 617 beschriebenen Verfahren herstellen. Als vorteilhaft hat es sich erwiesen, zunächst die Komponenten a bis c zu einem Präpolyester mit einer VZ von 50 bis 100 mL/g, vorzugsweise 60 bis 80 mL/g umzusetzen und diesen anschließend mit Kettenverlängeren d, beispielsweise mit Diisocyanaten oder mit epoxidhaltigen Polymethacrylaten in einer Kettenverlängerungsreaktion zu einem Polyester mit einer VZ von 100 bis 450 mL/g, vorzugsweise 120 bis 250 mL/g umzusetzen.

Als Säurekomponente a werden 90 bis 99,5 mol %. bezogen auf die Säurekomponenten a und b, vorzugsweise 91 bis 99 mol%, und insbesondere bevorzugt 92 bis 98 mol% Bernsteinsäure eingesetzt. Bernsteinsäure ist auf petrochemischem Weg sowie vorzugsweise aus nachwachsenden Rohstoffen wie beispielsweise in PCT/EP2008/006714 beschrieben zugänglich. PCT/EP2008/006714 offenbart ein biotechnologisches Verfahren zur Herstellung von Bernsteinsäure und 1,4-Butandiol ausgehend von unterschiedlichen Kohlehydraten mit Mikroorganismen aus der Klasse der Pasteurellaceae.

Säurekomponente b wird in 0,5 bis 10 mol %, vorzugsweise 1 bis 9 mol%, und insbesondere bevorzugt 2 bis 8 mol% bezogen auf die Säurekomponenten a und b, eingesetzt.

Unter C₈-C₂₀ Dicarbonsäuren b sind insbesondere Terephthalsäure, Korksäure, Azelainsäure, Sebazinsäure, Brassylsäure und/oder Arachidonsäure zu verstehen. Bevorzugt sind Korksäure, Azelainsäure, Sebazinsäure und/oder Brassylsäure. Die obengenannten Säuren einschließlich der Terephthalsäure sind aus nachwachsenden Rohstoffen zugänglich. Beispielsweise Sebazinsäure ist aus Rizinusöl zugänglich. Derartige Polyester zeichnen sich durch ein exzellentes biologisches Abbauverhalten aus [Literatur: Polym. Degr. Stab. 2004, 85, 855-863].

Die Dicarbonsäuren a und b können entweder als freie Säure oder in Form esterbildender Derivate eingesetzt werden. Als esterbildende Derivate sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch eingesetzt werden.

Die Diole 1,3-Propandiol und 1,4-Butandiol sind ebenfalls aus nachwachsenden Rohstoffen zugänglich. Es können auch Mischungen der beiden Diole verwendet werden. Aufgrund der höheren Schmelztemperaturen und der besseren Kristallisation des gebildeten Copolymers ist 1,4-Butandiol als Diol bevorzugt.

In der Regel wird zu Beginn der Polymerisation das Diol (Komponente c) zu den Säuren (Komponenten a und b) in einem Verhältnis von Diol zu Disäuren von 1,0 bis 2,5:1 und vorzugsweise 1,3 bis 2,2 :1 eingestellt. Überschüssige Diolmengen werden während der Polymerisation abgezogen, sodass sich am Ende der Polymerisation ein ungefähr äquimolares Verhältnis einstellt. Unter ungefähr äquimolar wird ein Diol/Disäuren-Verhältnis von 0,90 bis 1,10 verstanden.

In der Regel werden 0,05 bis 1 Gew-%, vorzugsweise 0,1 bis 0,9 Gew.-% und insbesondere bevorzugt 0,1 bis 0,8 Gew.-% bezogen auf das Gesamtgewicht der Komponenten a bis b, eines Vernetzers d und/oder Kettenverlängerers d' ausgewählt aus der Gruppe bestehend aus: einem polyfunktionellen Isocyanat, Isocyanurat, Oxazolin, Carbonsäureanhydrid wie Maleinsäureanhydrid, Epoxid (insbesondere einem epoxidhaltigen Poly(meth)acrylats), einem mindestens trifunktionellen Alkohol oder einer mindestens trifunktionellen Carbonsäure eingesetzt. Als Kettenverlängerer d' kommen polyfunktionelle und insbesondere difunktionelle Isocyanate, Isocyanurate, Oxazoline oder Epoxide in Frage.

Kettenverlängerer sowie Alkohole oder Carbonsäurederivate mit mindestens drei funktionellen Gruppen können auch als Vernetzer aufgefasst werden. Besonders bevorzugte Verbindungen haben drei bis sechs funktionellen Gruppen. Beispielhaft seien genannt: Weinsäure, Zitronensäure, Äpfelsäure, Trimesinsäure, Trimellitsäure, Trimellitsäureanhydrid, Pyromellitsäure und Pyromellitsäuredianhydrid; Trimethylolpropan, Trimethylolethan; Pentaerythrit, Polyethertriole und Glycerin. Bevorzugt sind Polyole wie Trimethylolpropan, Pentaerythrit und insbesondere Glycerin. Mittels der Komponenten d lassen sich biologisch abbaubare Polyester mit einer strukturellen Viskosität aufbauen. Das rheologische Verhalten der Schmelzen verbessert sich; die biologisch abbaubaren polyester lassen sich leichter verarbeiten, beispielsweise besser durch Schmelzeverfestigung zu Folien ausziehen. Die Verbindungen d wirken scherentzähend, d.h. sie verstärken die Strukturviskosität des Polymeren. Die Viskosität unter Belastung wird geringer.

In der Regel ist es sinnvoll die vernetzenden (mindestens trifunktionellen) Verbindungen zu einem früheren Zeitpunkt der Polymerisation zuzugeben.

Als bifunktionelle Kettenverlängerer eignen sich beispielsweise Toluylen-2,4-diisocyanat, Toluylen-2,6-diisocyanat, 2,2'-Diphenylmethandiisocyanat, 2,4'-Diphenylmethandiisocyanat, 4,4'-Diphenylmethan-diisocyanat, Naphthylen-1,5-diisocyanat oder Xylylen-diisocyanat,1,6-Hexamethylendiisocyanat, Isophorondiisocyanat oder Methylen-bis(4-isocyanatocyclo-hexan) verstanden. Besonders bevorzugte sind Isophorondiisocyanat und insbesondere 1,6-Hexamethylendiisocyanat.

Die Polyester i weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 50000 g/mol, ein gewichtsmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 30 und 450, vorzugsweise von 50 bis 400 g/mL (gemessen in o-Dichlorbenzol/Phenol (Gewichtsverhältnis 50/50)). Der Schmelzpunkt liegt im Bereich von 85 bis 130, bevorzugt im Bereich von 95 bis 120°C.

Als steife Komponente ii wird Polymilchsäure (PLA) eingesetzt.

Polymilchsäure mit dem folgenden Eigenschaftsprofil wird bevorzugt eingesetzt:
- einer Schmelzvolumenrate (MVR bei 190° C und 2.16 kg nach ISO 1133 von 0.5 bis 15 insbesondere von 1 bis 10 ml/10 Minuten)
- einem Schmelzpunkt unter 240° C;
- einem Glaspunkt (Tg) größer 55°C
- einem Wassergehalt von kleiner 1000 ppm
- einem Monomeren-Restgehalt (Lactid) von kleiner 0.3%
- einem Molekulargewicht von größer 80 000 Dalton.

Bevorzugte Polymilchsäuren sind beispielsweise NatureWorks® 6201 D, 6202 D, 6251 D, 3051 D und insbesondere 4020 D oder 4043 D sowie kristallinen Polymilchsäuretypen der Fa. NatureWorks.

Die Polymilchsäure ii wird in einem Gewichtsprozent-Anteil, bezogen auf die Komponenten i und ii, von 15 bis 50%, vorzugsweise von 15 bis 45% und insbesondere bevorzugt von 20 bis 40% eingesetzt. Hierbei bildet vorzugsweise die Polymilchsäure ii die disperse Phase und der Polyester i die kontinuierliche oder ist Teil einer cokontinuierlichen Phase. Polymermischungen mit Polyester i in der kontinuierlichen Phase oder als Teil einer cokontinuierlichen Phase weisen eine höhere Wärmeformbeständigkeit auf als Polymermischungen, in denen Polymilchsäure ii die kontinuierliche Phase bildet.

In der Regel werden 10 bis 50 Gew.-%, insbesondere 10 bis 40 und besonders bevorzugt 10 bis 35%, bezogen auf das Gesamtgewicht der Komponenten i bis iv, mindestens eines mineralischen Füllstoffs ausgewählt aus der Gruppe bestehend aus: Kreide, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorillonite, Talkum und Mineralfasern eingesetzt.

Kreide und Talkum sind als Füllstoffe besonders bevorzugt. Interessanterweise hat sich herausgestellt, dass durch den Zusatz von Kreide die biologische Abbaubarkeit der Artikel noch verbessert werden kann. Mit Talkum wiederum lässt sich effektiver das E-Modul erhöhen und die Wärmeformbeständigkeit verbessern.

Als besonders vorteilhaft haben sich Mischungen von Kreide und Talkum erwiesen. Hierbei hat sich ein Mischungsverhältnis von 1 : 5 bis 5 : 1, bevorzugt von 1 : 3 bis 3 : 1 und insbesondere von 1 : 2 bis 1 : 1 als vorteilhaft herausgestellt.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% nach 180 Tagen aufweist.

Im Allgemeinen führt die biologische Abbaubarkeit dazu, dass die Polyester-(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 (Bezug nehmend auf ISO 14855) CO₂-freie Luft durch gereiften Kompost während des Kompostierens strömen gelassen und dieser einem definiertem Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂**-**Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

Das Thermoformen ist ein Verfahren zur Umformung thermoplastischer Kunststoffe und wird auch als Tiefziehen bezeichnet.

Das Halbzeug wird je nach Anlagentyp als Folienrolle oder Plattenware zugeführt. Die Herstellung der Folien und Platten erfolgt üblicherweise mit einem Einschneckenextruder mit nachgeschaltetem Breitschlitzwerkzeug und 3-Walzen-Glättwerk.

Artikel aus Folien (typischerweise 50 µm bis 1 mm) wie Pralinenschachteleinlagen, Schaumküsse-Verpackung, Spielekartoneinsätze, Klappblister für alle möglichen Kleinartikel an Lochrasterwänden im Einzelhandel, Joghurt-oder Margarinebecher sind weit verbreitet. Schiebekartenblister, Siegelhauben und die schwer zu öffnenden Klappblister, in denen oft Kleinteile verkauft werden, und die mittels Hochfrequenz-HF-Elektroden verschweißt sind, gehören auch dazu.

Platten zwischen 1 bis 2 mm Dicke werden verarbeitet für Sortiertabletts, Transporttabletts, KLT (Kleinladungsträger)-Einlagen oder einfache technische Teile.

Für das Thermoformen eignen sich insbesondere Polymermischungen der Komponenten i bis iv mit einem MVR (190 °C, 2,16 kg) nach ISO 1133 von 1 bevorzugt von 1 bis 15 cm³/10 min, insbesondere bevorzugt 4 bis 15 cm³/10 min. Weiterhin haben sich in diesen Polymermischungen insbesondere Polyester i als geeignet erwiesen, die 0.05 bis 1 Gew.-%, bevorzugt von 0.01 bis 0.9 Gew.-% und insbesondere bevorzugt von 0,1 bis 0,8 Gew.-%, bezogen auf die Komponenten a bis c, eines Verzweigers enthalten. Als besonders geeignete Verzweiger haben sich Polyole wie Pentaerythrit oder Glycerin erwiesen.

### Anwendungstechnische Messungen:

Die Molekulargewichte Mn und Mw der teilaromatischen Polyester wurde gemäß DIN 55672-1 mittels SEC bestimmt: Elutionsmittel Hexafluoroisopropanol (HFIP) + 0,05 Gew.-% Trifluoroessigsäure-Ka-Salz; Die Kalibrierung erfolgte mit eng verteilten Polymethylmethacrylat-Standards.

Die Bestimmung der Viskositätszahlen erfolgte nach DIN 53728 Teil 3, 3. Januar 1985, Kapillarviskosimetrie. Zum Einsatz kam ein Mikro-Ubbelohde Viskosimeter, Typ M-II. Als Lösungsmittel wurde das Gemisch: Phenol/o-Dichlorbenzol im Gewichtsverhältnis 50/50 verwendet.

Der E-Modul wurde mittels eines Zugversuchs an Pressfolien mit einer Dicke von etwa 420 µm gemäß ISO 527-3: 2003 bestimmt.

Die Charpy Schlagzähigkeit wurde gemäß ISO 179-2/1eU:1997 bestimmt. Der Probekörper (80mm x 10 mm x4 mm), gelagert nahe an seinen Enden als waagerechter Balken, wird durch einen einzelnen Schlag eines Pendels beansprucht, wobei die Aufschlaglinie in der Mitte zwischen den beiden Probekörper-Widerlagern liegt und (der Probekörper) mit einer hohen, nominell konstanten Geschwindigkeit (2,9 oder 3,8 m/s) gebogen wird.

Die Wärmeformbeständigkeit HDT-B wurde gemäß ISO 75-2:2004 bestimmt. Ein Standardprobekörper wird einer Dreipunktbiegung unter konstanter Last ausgesetzt, um eine Biegespannung (HDT/B 0.45 MPa) zu erzeugen, die in dem betreffenden Teil dieser Internationalen Norm angegeben wird. Die Temperatur wird mit gleichförmiger Geschwindigkeit (120 K/h) erhöht, und der Temperaturwert, bei dem eine festgelegte Standarddurchbiegung, die der festgelegten Biegedehnungserhöhung (0.2%) entspricht, erreicht wird, wird gemessen.

Die Abbauraten der biologisch abbaubaren Polyestermischungen und der zum Vergleich hergestellten Mischungen wurden wie folgt bestimmt:

Aus den biologisch abbaubaren Polyestermischungen und den zum Vergleich hergestellten Mischungen wurden durch Pressen bei 190°C jeweils Folien mit einer Dicke von 400 µm hergestellt. Diese Folien wurden jeweils in rechteckige Stücke mit Kantenlängen von 2 x 5 cm geschnitten. Das Gewicht dieser Folienstücke wurde bestimmt. Über einen Zeitraum von vier Wochen wurden die Folienstücke in einem Trockenschrank in einer mit befeuchteter Komposterde gefüllten Kunststoffdose auf 58 °C erhitzt. Im Wochenabstand wurde jeweils das verbleibende Gewicht der Folienstücke gemessen. Unter der Annahme, dass die biologische Abbaubarkeit in diesen Fällen als reiner Oberflächenprozess betrachtet werden kann, wurde zur Bestimmung der Steigung der erhaltenen Gewichtsabnahme (Geschwindigkeit des Bioabbaus) die Differenz aus dem nach einer Probennahme gemessenen Gewicht und der Masse der Folie vor Versuchsbeginn abzüglich der durchschnittlichen Gesamtgewichtsabnahme bis zur vorhergehenden Probenentnahme errechnet. Die erhaltene Massenreduktion wurde darüber hinaus auf die Oberfläche (in cm²) wie auch die Zeit zwischen aktueller und vorhergehender Probennahme (in d) normiert.

Die bestimmten Abbaugeschwindigkeiten wurden auf die Abbaugeschwindigkeit von PBS (= 100%) bezogen.

### Ausgangsstoffe

### Polyester i:

### a) Polylbutylensuccinat

Zunächst wurde Butandiol (93,7 g, 130 mol%), Bernsteinsäure (94,5 g, 100 mol%) und Glycerin 0,2 g (0,1 Gew.-%) in Anwesenheit von Tetrabutyl-ortho-titanat TBOT (0.2 g) auf 200 °C erhitzt und während 30 min wurde das entstehende Wasser abdestilliert. Dieser Präpolyester wurde anschließend bei vermindertem Druck (< 5 mbar) zum hochmolekularen Polyester umgesetzt. Dazu wurde bis zu einer Temperatur von 250 °C 1,4-Butandiol abdestilliert. Der erhaltene Polyester wies eine VZ von 171 mUg auf.

### b) Polybutylensuccinat-co-suberat (Bernsteinsäure : Korksäure = 90 : 10)

Butandiol (85,0 g, 130 mol%), Bernsteinsäure (77,1 g, 90 mol%) und Korksäure (12,6 g, 10 mol%) und Glycerin 0,18 g (0,1 Gew.-%) wurden in Anwesenheit von TBOT (0,2 g) zunächst auf 200 °C erhitzt. Die Schmelze wurde während 80 min auf dieser Temperatur gehalten. Anschließend wurde bei vermindertem Druck (< 5 mbar) und einer maximalen Innentemperatur von 250 °C 1,4-Butandiol abdestilliert. Der Polyester wurde ausgegossen und nach Abkühlen analysiert. Der erhaltene Polyester wies eine Viskositätszahl von 170 mL/g auf.

### c) Polybutylensuccinat-co-Sebacat (Bernsteinsäure : Sebacinsäure = 95 : 5)

Butandiol (89.0 g, 130 mol%), Bernsteinsäure (85.3 g, 95 mol%), Sebazinsäure (7.7 g, 5 mol%) und Glycerin 0,14 g (0,1 Gew.-%) wurden in Anwesenheit von TBOT (0.2 g) zunächst auf 200 °C erhitzt. Die Schmelze wurde während 80 min auf dieser Temperatur gehalten. Anschließend wurde bei vermindertem Druck (< 5 mbar) und einer maximalen Innentemperatur von 250 °C 1,4-Butandiol abdestilliert. Der Polyester wurde ausgegossen und nach Abkühlen analysiert. Der erhaltene Polyester wies eine Viskositätszahl von 227 mL/g und einem MVR von 7,57 cm³/10 min auf.

### d) Polybutylensuccinat-co-Sebacat (Bernsteinsäure : Sebacinsäure = 90 : 10)

Butandiol (87,5 g, 130 mol%), Bernsteinsäure (79.4 g, 90 mol%), Sebazinsäure (15.1 g, 10 mol%) und Glycerin 0,19 g (0,1 Gew.-%) wurden in Anwesenheit von TBOT (0.2 g) zunächst auf 200 °C erhitzt. Die Schmelze wurde während 80 min auf dieser Temperatur gehalten. Anschließend wurde bei vermindertem Druck (< 5 mbar) und einer maximalen Innentemperatur von 250 °C 1,4-Butandiol) abdestilliert. Der Polyester wurde ausgegossen und nach Abkühlen analysiert. Der erhaltene Polyester wies eine Viskositätszahl von 252 mUg auf.

### e) Polybutylensuccinat-co-azelat (Bernsteinsäure : Azelainsäure = 90 : 10)

Butandiol (92.0 g, 130 mol%), Bernsteinsäure (83.4 g, 90 mol%), Azelainsäure (14.8 g, 10 mol%) und Glycerin 0,19 g (0,1 Gew.-%) wurden in Anwesenheit von TBOT (0.2 g) zunächst auf 200 °C erhitzt. Die Schmelze wurde während 80 min auf dieser Temperatur gehalten. Anschließend wurde bei vermindertem Druck (< 5 mbar) und einer maximalen Innentemperatur von 250 °C 1,4-Butandiol abdestilliert. Der Polyester wurde ausgegossen und nach Abkühlen analysiert. Der erhaltene Polyester wies eine Viskositätszahl von 214 mUg auf.

### f) Polybutylensuccinat-co-brassylat (Bernsteinsäure : Brassylsäure = 90 : 10)

Butandiol (85 g, 130 mol%), Bernsteinsäure (77.1 g, 90 mol%), Brassylsäure (18.1 g, 10 mol%) und Glycerin 0,17 g (0,1 Gew.-%) wurden in Anwesenheit von TBOT (0.2 g) zunächst auf 200 °C erhitzt. Die Schmelze wurde während 80 min auf dieser Temperatur gehalten. Anschließend wurde bei vermindertem Druck (< 5 mbar) und einer maximalen Innentemperatur von 250 °C 1,4-Butandiol abdestilliert. Der Polyester wurde ausgegossen und nach Abkühlen analysiert. Der erhaltene Polyester wies eine Viskositätszahl von 160 mL/g auf.

### g) Polybutylensuccinat-co-terephthalat (Bernsteinsäure: Terephthalsäure = 90 : 10)

Butandiol (90.8 g, 130 mol%), Bernsteinsäure (82.4 g, 90 mol%), Dimethylterephthalat (15.0 g, 10 mol%) und Glycerin 0,18 g (0,1 Gew.-%) wurden in Anwesenheit von TBOT (0.2 g) zunächst auf 200 °C erhitzt. Die Schmelze wurde während 80 min auf dieser Temperatur gehalten. Anschließend wurde bei vermindertem Druck (< 5 mbar) und einer maximalen Innentemperatur von 250 °C 1,4-Butandiol abdestilliert. Der Polyester wurde ausgegossen und nach Abkühlen analysiert. Der erhaltene Polyester wies eine Viskositätszahl von 172 mL/g auf.

### h) Polybutylensuccinat (PBS GreenPLA) der Fa. Mitsubishi; der MVR liegt bei 4,5 cm³/10 min (190°C, 2,16 kg)

### i) Vergleichssubstanz PBS Bionolle® 1020) der Fa. Showa Highpolymer; der MVR liegt bei 20-34 cm³/10 min (190°C, 2,16 kg)

Zur Bestimmung der biologischen Abbaubarkeit wurden mittels einer Formpresse Folien einer Dicke von etwa 420 µm hergestellt.

Tabelle 1 - Biologische Abbaugeschwindigkeit gemessen anhand des Masseverlustes eines Formkörpers, normiert auf die Oberfläche des Formkörpers. Relativ zu PBS (= 100%):

| Beispiel | Material | Rel. Abbaugeschwindkeit (normierter Masseverlust) |
|---|---|---|
| | | [%] |
| a | PBS | 100 |
| b | PBSSub 10% | 450 |
| c | PBSSe 5% | 300 |
| d | PBSSe 10% | 700 |
| e | PBSAz 10% | 850 |
| f | PBSBry 10% | 1000 |
| g | PBST 10% | 260 |

Polymilchsäure ii-1: 4043D der Fa. NatureWorks, MVR bei 2,5 cm³/10 min (190°C, 2,16 kg)

### Mineralische Füllstoffe

iii-1: Kreide der Fa. Omya, Omyafilm 764-OM
iii-1: Talkum der Fa. Mondominerals, Microtalc IT extra

### Beispiele

### l) Herstellung der Polymermischungen (AV1)

Die in Tabelle 2 aufgeführten Compounds wurden auf einem Extruder des Typs Coperion ZSB 40 gefertigt. Die Temperaturen am Austritt wurden auf 250°C eingestellt. Anschließend wurde das Extrudat unter Wasser granuliert. Im Anschluss an die Granulatherstellung wurde eine Flachfolie mit einer Dicke von 1,2 mm Dicke hergestellt. Die Verarbeitungstemperaturen wurden hier auf 190°C Massetemperatur eingestellt.

**Tabelle 2- Durch AV1 hergestellte Compounds; Angaben in Gewichtsprozent**

| Compound | Polyester i) i-c) | Polyester i) i-h) | Polyester i) i-i) | PLA ii-1) | Kreide iii)-1). | Talkum iii-2) |
|---|---|---|---|---|---|---|
| 1 | 49 | | | 21 | 15 | 15 |
| 2 | | 49 | | 21 | 15 | 15 |
| V-3 | | | 49 | 21 | 15 | 15 |

### II)Herstellung der thermogeformten Teile

Hier wurde eine halbautomatische Thermoformmaschine vom Typ Illig UA100/4 verwendet. Die Heizleistung von 27,4 kW wurde erzeugt durch einen unteren und einen oberen Keramikstrahler. Die Umformung erfolgte mittels Vakuum. Zum Einsatz für die Versuche kam ein Becherwerkzeug aus Holz mit einem Grunddurchmesser von 67,0 mm, einer Höhe von 72,0 mm sowie einem oberen Durchmesser von 55,0 mm. Die Kante des Bechers hatte einen Radius von ca. 8,0 mm.

### Versuch 1:

Mit den Compounds 1 und 2 ließen sich ohne Probleme Flachfolien in der Dicke von 1,2 mm herstellen. Das anschließende Aufheizen unter den Quarzstrahlern sowie das Umformen zu der Bechergeometrie erfolgte ohne Probleme. Fazit: Die erfindungsgemäßen Compounds 1 und 2 sind geeignet zum Thermoformen dieser Bechergeometrie.

### Vergleichsversuch 2:

Die Versuchsabfolge (Flachfolienherstellung, Aufheizen und Thermoformen mit Vakuumunterstützung) wurde versucht mit dem Compound V-3 durchzuführen. Die Flachfolienherstellung konnte ebenfalls mit V-3 erfolgen. Unterschiede gab es bei dem Aufheizverhalten: Während Compounds 1 und 2 weder ein signifikantes Durchhängen der durchgewärmten Folie zeigten, noch andere Probleme bei der Erwärmung, so zeigte die Folie des Compounds V-3 lokale Stellen die durchhingen. Als dann (rein optisch) das Material den Erweichungspunkt erreichte, ging der Folie die notwendige Stabilität völlig verloren und kam zum Abriss (Lochbildung). Die Versuche wurden jeweils mindestens 5 Mal wiederholt. Die beschriebenen Ergebnisse waren reproduzierbar.

## Patentansprüche

1. Durch Thermoformen hergestellter Artikel enthaltend:
i) 50 bis 85 Gew.-%, bezogen auf das Gesamtgewicht der Komponenten i bis ii, eines biologisch abbaubaren Polyesters mit einem MVR (190°C, 2,16 kg) von 1 bis 15 cm³/10 min enthaltend:
a) 90 bis 100 mol %, bezogen auf die Komponenten a bis b, Bernsteinsäure;
b) 0 bis 10 mol %, bezogen auf die Komponenten a bis b, einer oder mehrerer C₆-C₂₀ Dicarbonsäuren;
c) 98 bis 102 mol %, bezogen auf die Komponenten a bis b, 1,3 Propandiol oder 1,4-Butandiol;
d) 0,05 bis 1 Gew.- %, bezogen auf die Komponenten a bis c eines Kettenverlängerers oder Verzweigers;
ii) 15 bis 50 Gew.-%, bezogen auf das Gesamtgewicht der Komponenten i bis ii, Polymilchsäure;
iii) 10 bis 50 Gew.-%, bezogen auf das Gesamtgewicht der Komponenten i bis iv, mindestens eines mineralischen Füllstoffs;
iv) 0 bis 2 Gew.-%, bezogen auf das Gesamtgewicht der Komponenten i bis iv, einer Nährsalz-Mischung enthaltend mindestens zwei Komponenten ausgewählt aus der Gruppe bestehend aus: Stickstoff-haltiges Kation oder Anion, Schwefelhaltiges Anion, Phosphorhaltiges Anion und Kation ausgewählt aus der Gruppe bestehend aus K⁺, Na⁺, Ca²⁺, Mg²⁺ und Fe^{2/3+}.

2. Artikel nach Anspruch 1, wobei Komponente b in Polyester i 0,5 bis 10 mol% einer Dicarbonsäure ausgewählt aus der Gruppe bestehend aus Korksäure, Azelainsäure, Sebazinsäure und/oder Brassylsäure ist.

3. Artikel nach Anspruch 1 oder 2, wobei Polyester i die kontinuierliche oder Teil einer cokontinuierlichen Phase bildet.

4. Artikel nach Anspruch 1 bis 3, wobei Füllstoff iii Kreide ist.

5. Artikel nach Anspruch 1 bis 3, wobei Füllstoff iii Talkum ist.

6. Artikel nach Anspruch 1 bis 3, wobei Füllstoff iii eine Mischung von Talkum zu Kreide in einem Verhältnis von 1:5 bis 5:1 ist.

7. Artikel nach einem der Ansprüche 1 bis 6 mit einer Wandstärke von 50 µm bis 2 mm.

8. Artikel nach einem der Ansprüche 1 bis 6 mit einem E-Modul nach ISO 527-3 von 1200 bis 4500 MPa und einer HDT-B Temperatur nach ISO 75-2 von 60 bis 115 °C.

## Claims

1. An item produced via thermoforming and comprising:
i) from 50 to 85% by weight, based on the total weight of components i to ii, of a biodegradable polyester with MVR (190°C, 2.16 kg) of from 1 to 15 cm³/10 min and comprising:
a) from 90 to 100 mol%, based on components a to b, of succinic acid;
b) from 0 to 10 mol%, based on components a to b, of one or more C₆-C₂₀ dicarboxylic acids;
c) from 98 to 102 mol%, based on components a to b, of 1,3-propanediol or 1,4-butanediol;
d) from 0.05 to 1% by weight, based on components a to c, of a chain extender or branching agent;
ii) from 15 to 50% by weight, based on the total weight of components i to ii, of polylactic acid;
iii) from 10 to 50% by weight, based on the total weight of components i to iv, of at least one mineral filler;
iv) from 0 to 2% by weight, based on the total weight of components i to iv, of a nutrient salt mixture comprising at least two components selected from the group consisting of: nitrogen-containing cation or anion, sulfur-containing anion, phosphorus-containing anion, and cation selected from the group consisting of K⁺, Na⁺, Ca²⁺, Mg²⁺, and Fe^{2/3+}.

2. The item according to claim 1, where component b in polyester i is from 0.5 to 10 mol% of a dicarboxylic acid selected from the group consisting of suberic acid, azelaic acid, sebacic acid, and/or brassylic acid.

3. The item according to claim 1 or 2, where polyester i forms the continuous phase or part of a co-continuous phase.

4. The item according to any of claims 1 to 3, where filler iii is chalk.

5. The item according to any of claims 1 to 3, where filler iii is talc powder.

6. The item according to any of claims 1 to 3, where filler iii is a mixture of talc powder and chalk in a ratio of from 1:5 to 5:1.

7. The item according to any of claims 1 to 6 with a wall thickness of from 50 µm to 2 mm.

8. The item according to any of claims 1 to 6 with a modulus of elasticity to ISO 527-3 of from 1200 to 4500 MPa and with an HDT-B temperature to ISO 75-2 of from 60 to 115°C.

## Revendications

1. Article fabriqué par thermoformage, contenant :
i) 50 à 85 % en poids, par rapport au poids total des composants i à ii, d'un polyester biodégradable ayant un MVR (190 °C, 2,16 kg) de 1 à 15 cm³/10 minutes, contenant :
a) 90 à 100 % en moles, par rapport aux composants a à b, d'acide succinique ;
b) 0 à 10 % en moles, par rapport aux composants a à b, d'un ou de plusieurs acides dicarboxyliques en C₆-C₂₀ ;
c) 98 à 102 % en moles, par rapport aux composants a à b, de 1,3-propanediol ou de 1,4-butanediol ;
d) 0,05 à 1 % en poids, par rapport aux composants a à c, d'un allongeur de chaîne ou d'un agent de ramification ;
ii) 15 à 50 % en poids, par rapport au poids total des composants i à ii, d'acide polylactique ;
iii) 10 à 50 % en poids, par rapport au poids total des composants i à iv, d'au moins une charge minérale ;
iv) 0 à 2 % en poids, par rapport au poids total des composants i à iv, d'un mélange de sels nutritifs contenant au moins deux composants choisis dans le groupe constitué par : un cation ou un anion contenant de l'azote, un anion contenant du soufre, un anion contenant du phosphore et un cation choisi dans le groupe constitué par K⁺, Na⁺, Ca²⁺, Mg²⁺ et Fe^{2/3+}.

2. Article selon la revendication 1, dans lequel le composant b dans le polyester i est 0,5 à 10 % en moles d'un acide dicarboxylique choisi dans le groupe constitué par l'acide subérique, l'acide azélaïque, l'acide sébacique et/ou l'acide brassylique.

3. Article selon la revendication 1 ou 2, dans lequel le polyester i forme la phase continue ou une partie d'une phase co-continue.

4. Article selon les revendications 1 à 3, dans lequel la charge iii est la craie.

5. Article selon les revendications 1 à 3, dans lequel la charge iii est le talc.

6. Article selon les revendications 1 à 3, dans lequel la charge iii est un mélange de talc et de craie en un rapport de 1:5 à 5:1.

7. Article selon l'une quelconque des revendications 1 à 6, présentant une épaisseur de paroi de 50 µm à 2 mm.

8. Article selon l'une quelconque des revendications 1 à 6, présentant un module E selon ISO 527-3 de 1 200 à 4 500 MPa et une température HDT-B selon ISO 75-2 de 60 à 115 °C.
